# EUROPÄISCHE PATENTANMELDUNG

(11) **EP 0 999 603 A1**
(43) Veröffentlichungstag der Anmeldung: **10.05.2000**
(21) Anmeldenummer: 99119841.7
(22) Anmeldetag: 07.10.1999
(51) Int. Cl.: H01M 4/08

(54) **Verfahren zur Herstellung einer positiven Elektrode für ein alkalisches Primärelement**

(30) Priorität: 02.11.1998 DE 19850474
(71) Anmelder: VARTA Gerätebatterie GmbH, 30419 Hannover (DE)
(72) Erfinder: Jose, Horst-Udo, 73479 Ellwangen (DE)
(74) Vertreter: Kaiser, Dieter Ralf, Dipl.-Ing.

(57) **Zusammenfassung**

Die Erfindung betrifft ein Verfahren zur Herstellung einer ein organisches Polymer als Bindemittel enthaltenden positiven Elektrode für Primärelemente mit alkalischem Elektrolyten. Das erfindungsgemäße Verfahren wird in der Weise durchgeführt, daß Braunsteinteilchen mit einer Graphitdispersion, die ein organisches Polymer enthält, gemischt und zu einem Elektrodenkörper gepreßt werden. Die Braunsteinteilchen können zu einem Walzband kompaktiert werden, welches zu einem Granulat gebrochen und zu Elektrodenkörpern gepresst wird.

## Beschreibung

Die Erfindung betrifft ein Verfahren zur Herstellung einer ein organisches Polymer als Bindemittel enthaltenden positiven Elektrode für Primärelemente mit alkalischen Elektrolyten.

Bei der Herstellung von alkalischen Primärelementen vom Massetyp wird die Elektrodenmasse für die positive Elektrode zu zylindrischen Formteilen gepreßt. Die Hauptbestandteile der Elektrodenmasse sind Braunstein und ein gut leitfähiger Graphit, der die elektronische Leitfähigkeit der Elektrode verbessert. Manche Hersteller setzen der Elektrodenmasse für die positive Elektrode alkalischer Primärelemente 4 bis 8 Gew.% an wäßriger Kaliumhydroxid-Lösung (KOH) zu. Die aus diesem Gemisch auf handelsüblichen Maschinen hergestellten Preßkörper müssen neben den elektrochemischen Erfordernissen auch Mindestanforderungen bezüglich der Maßhaltigkeit und der mechanischen Festigkeit erfüllen, um eine problemlose Handhabung in der Massenfertigung zu gewährleisten. Der Elektrodenmasse wird zu diesem Zweck häufig ein Bindemittel zugemischt. Der Zusatz der genannten Mengen an KOH-Lösung bewirkt zwar einen adhesiven Zusammenhalt der Masseteilchen, er führt jedoch gleichzeitig zu einem überproportionalen Verschleiß der Preßwerkzeuge.

Aus der Literatur sind eine Reihe von polymeren Bindemitteln bekannt, die als trockene Pulver, Lösungen in organischen Lösungsmitteln oder als Dispersionen der Elektrodenmasse zugesetzt werden. Das Dokument DE-A 1228685 offenbart die Verwendung einer Polyisobutylen-Lösung als Bindemittel in der Elektrodenmasse. Aus dem Dokument DE-A 2354023 ist der Einsatz einer wäßrigen Polyisobutylen-Dispersion als Bindemittel für die Elektrodenmasse eines alkalischen Primärelements bekannt. Aus den Dokumenten JP-A 55050577 oder JP-A 57152674 ist die Verwendung von Polytetrafluorethylen, Polyethylen oder Polystyren bzw. Salzen der Polyacrylsäure als Bindemittel für den genannten Zweck bekannt. Darüber hinaus offenbart das Dokument JP-A 04296449 die Verwendung eines Gemisches aus hydrophoben und hydrophilen Bindemitteln für die Herstellung von Kathodenkörpern alkalischer Primärelemente.

Bei der Zugabe von organischen Bindemitteln in Lösungen werden die Braunstein- und Graphitteilchen mit einer Haut des Bindemittels überzogen, die neben einem elektronischen Isolierungseffekt eine für die elektrochemische Energiefreisetzung unerwünschte Hydrophobierung des Kathodenkörpers zur Folge hat. Das Eindringen und Benetzen der Braunsteinteilchen mit Elektrolyt wird dadurch erschwert.

Bei Verwendung von trockenen, pulverförmigen Bindemitteln tritt ein hautförmiger Überzug der in der Elektrodenmasse befindlichen Teilchen nicht auf. Es kommt jedoch auch bei langandauernder Vermischung zu ungleichmäßigen Verteilungen des Bindemittels und stark unterschiedlichen hydrophoben bzw. hydrophilen Bereichen in den Kathodenkörpern. Insbesondere tendieren die bekannten Bindemittel in der fertigen Elektrode dazu, den Zwischenraum zwischen den elektrochemisch aktiven Teilchen auszufüllen. Daraus resultiert eine Erhöhung des inneren Widerstandes der Zellen.

Die Erfindung hat sich die Aufgabe gestellt, ein Verfahren anzugeben, mit dem positive Elektrodenkörper erhalten werden, die eine ausreichende Festigkeit aufweisen und insbesondere bei Belastungen mit höheren Strömen eine Verbesserung der Kapazitätsausbeuten zeigen.

Erfindungsgemäß wird die Aufgabe durch ein Verfahren gelöst, welches gattungsgemäß im Anspruch 1 dargelegt ist und sich dadurch auszeichnet, daß Braunsteinteilchen mit einer Graphitdispersion, die ein organisches Polymer enthält, gemischt und zu einem Elektrodenkörper gepreßt werden.

Vorteilhafterweise beträgt die mittlere Teilchengröße des Graphits der Graphitdispersion weniger als 10 µm.

Die Erfindung wird in der Weise weiter ausgebildet, daß die verwendete Graphitdispersion 10 bis 50 Gew.% Graphit und 5 bis 35 Gew.% eines organischen Polymers sowie als Rest ein Dispersionsmedium enthält. Insbesondere ist das organische Polymer ein amphiphiles Copolymer, welches aus der Klasse der Copolymeren des Vinylacetats ausgewählt ist. Vorzugsweise wird eine wäßrige Graphitdispersion zur Herstellung der Elektrodenkörper eingesetzt, wobei vorzugsweise 0,5 bis 3 Gew.% der wäßrigen Dispersion eingesetzt werden.

Im einzelnen erfolgt die Herstellung der Elektrodenkörper dadurch, daß elektrochemisch gereinigter Braunstein (EMD) mit dem Graphit trocken vorgemischt wird. Danach wird die Graphitdispersion in den laufenden Mischer eingedüst bzw. langsam einlaufen lassen. Nach einer weiteren Nachmischzeit wird dann noch gegebenenfalls die wäßrige KOH-Lösung zudosiert und homogenisiert.

Die Zugabe der beiden Flüssigkomponenten (Graphitdispersion , KOH-Lösung) kann auch in der Weise erfolgen, daß sie im entsprechenden Mengenverhältnis vorgemischt und dann zusammen in die Trockenmischung eindosiert werden. Damit wird in Abhängigkeit vom jeweiligen Mischersystem eine noch bessere Verteilung der Graphitdispersion erreicht.

Die oben beschriebene Elektrodenmischung für die Kathode wird dann zwischen Kompakterwalzen zu einem festen Band gewalzt und im Anschluß daran in einem Granulierungsprozeß wieder in die gewünschte Kornfraktion zerkleinert.

Die so hergestellte fließfähige 'körnige' Kathodenmasse wird anschließend beispielsweise in Rundläuferpressen zu Kathodenringen oder Tabletten in den vom Zellentyp abhängigen Größen verpreßt.

Die so hergestellten Elektroden sind in dieser Form für den weiteren Einbau in die entsprechenden Zellenbehälter verarbeitbar. Die mechanische Stabilität der derart gefertigten positiven Elektroden ist bei entsprechender Preßdichte von z.B. ca. 3,1 - 3,2 g/cm³ hoch genug, so daß sie zerstörungsfrei über Zuführungen in den Zellenbehälter eingebracht werden können.

Die hergestellten Elektrodenkörper lassen sich in bekannter Weise, z.B. zur Herstellung von primären galvanischen Zellen verwenden, indem sie in ein Zellengefäß eingebracht werden, in das anschließend weiterer KOH-Elektrolyt (Tränkelektrolyt) und eine Zinkelektrode (Anodengel) unter Zwischenlage eines Separators eindosiert wird.

Überraschenderweise zeigen die erfindungsgemäß hergestellten Elektroden in den galvanischen Elementen ein ausgezeichnetes Kapazitätsverhalten. Hervorzuheben sind besonders Vorteile in der Ausnutzbarkeit des Braunsteins (EMD's) sowie eine Verbesserung von harten Entladungen, wobei sich dies besonders nach Lagerung als Vorteil herausstellt und somit der Zellenalterung entgegenwirkt. Durch den Verzicht von z.B. hydrophile Binder zeigen die erfindungsgemäß hergestellten Elektroden auch keine Quellung der Elektroden nach einer weiteren Zugabe des oben genannten (KOH-) Tränkelektrolyten, was in jedem Falle eine einfache und sichere Zellenkomplettierung in der Massenherstellung garantiert.

Der erfindungsgemäße Einsatz der Graphitdispersion dient einer guten Verpressbarkeit, einer geringeren und weniger störenden vorzeitigen Elektrodenqellung (im Vergleich zu hydrophilen Bindern) und einer Kapazitätssteigerung (im Gegensatz zu rein hydrophoben nicht leitenden Bindern).

Eine weitere Variante der Graphitdispersionseinbringung besteht darin, daß auch Teilmengen davon noch zusätzlich auf das schon fertig kompaktierte und granulierte Korn dünn aufgesprüht werden (coating). Dies hat den Vorteil, daß die später zur Kathode zu verpressenden Körner einerseits besser aneinander haften (Erhöhung der Bruchfestigkeit), und andererseits das 'Massekorn' durch den Graphitanteil leichter fließen lassen (Verbesserung der Fließfähigkeit). Weiterhin führt die Erhöhung des Graphitanteils an der Kornoberfläche zu einer Schmierung der Preßwerkzeuge. Letzteres ist gerade dann wichtig, wenn z. B. der Graphitanteil in der Masse noch weiter reduziert werden soll. Für diesen zusätzlichen Coating-Prozeß wird in der Graphitdispersion das Verhältnis Graphit und Polymer nach Bedarf und erwünschter Wirkung verändert.

Eine derartige Kathode besitzt beispielsweise folgende Zusammensetzung:
89,8 Gew.% EMD
5 Gew.% Graphit
3,8 Gew.% KOH-Lösung (50%ig)
1,4 Gew.% Dispersionslösung

Die Erfindung wird anhand der nachfolgenden Beispiele näher erläutert.

Die Erprobung erfolgte an Versuchszellen der Baugröße LR6. Dazu wurden jeweils als positive Kathode 3 ringförmige Preßlinge (Gewicht je 3,4g) mit einer Höhe von je 14,2 mm sowie Außendurchmesser von 13,05 mm und Innendurchmesser von 8,75 mm in einen vernickelten und innenseitig zusätzlich graphitierten Stahlbecher eingepreßt.
Erfindungsgemäße Elektrodenmasse:
   88,15 Gew.% Braunstein
   6 Gew.% Graphit
   4,5 Gew.% KOH-Lösung (50%ig)
   1,35 Gew.% Dispersionslösung
Vergleichsbeispiel (trockenes Bindemittel):
   89 Gew.% Braunstein
   6 Gew.% Graphit
   4,5Gew.% KOH-Lösung (50%ig)
   0,5 Gew.% Sanfresh DK 300 Pulver
Vergleichsbeispiel (Polyacrylsäuredispersion)
   88,50 Gew.% Braunstein
   6 Gew.% Graphit
   4,5Gew.% KOH-Lösung (50%ig)
   1 Gew.% Polyacrylsäure-Dispersion
Vergleichsbeispiel (Poly-Butylacrylat-Dispersion)
   88,50 Gew.% Braunstein
   6 Gew.% Graphit
   4,5 Gew.% KOH-Lösung (50%ig)
   1 Gew.% Poly-Butylacrylat-Dispersion
Separator: 2-lagiger Kreuzwickel
Tränkelektrolyt 1,3 g: 38 Gew.% KOH-Lösung
negative Elektrode 5,2 g:
   65 Gew.% Zinkpulver
   0,3 Gew.% carboxylierte Methylcellulose
   0,25 Gew.% Polyacrylat
   0,024 Gew.% Indiumoxid
   34,426 Gew.% KOH-Lösung (38%ige mit 2 Gew.% ZnO)

Die Versuchsergebnisse der Vergleichsversuche für die verschiedenen Testbedingungen sind in Tabelle 1 zusammengefaßt.

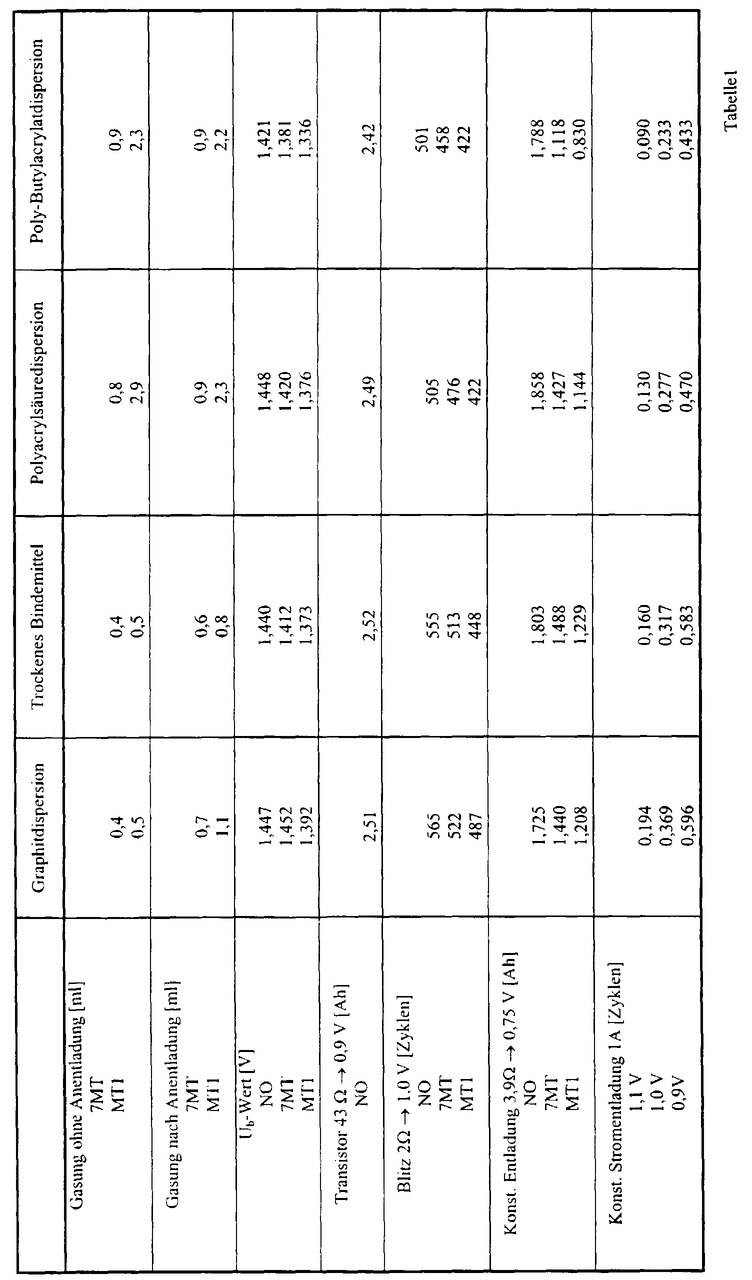

## Patentansprüche

1. Verfahren zur Herstellung einer ein organisches Polymer als Bindemittel enthaltenden positiven Elektrode für Primärelemente mit alkalischem Elektrolyten, dadurch gekennzeichnet, daß Braunsteinteilchen mit einer Graphitdispersion, die ein organisches Polymer enthält, gemischt und zu einem Elektrodenkörper gepreßt werden.

2. Verfahren nach Anspruch 1, dadurch gekennzeichnet, daß die Braunsteinteilchen mit der Graphitdispersion besprüht und zu einem Walzband kompaktiert werden, welches zu einem Granulat gebrochen und zu Elektrodenkörpern gepreßt wird.

3. Verfahren nach Anspruch 2, dadurch gekennzeichnet, daß das Granulat mit einer Graphitdispersion besprüht und zu Elektrodenkörpern gepreßt wird.

4. Verfahren nach Anspruch 1, dadurch gekennzeichnet, daß Braunsteinteilchen mit wäßriger KOH-Lösung gemischt, zu einem Walzband kompaktiert und anschließend zu einem Granulat gebrochen werden, daß das Granulat mit einer Graphitdispersion besprüht und zu den Elektrodenkörpern gepreßt wird.

5. Verfahren nach einem oder mehreren der Ansprüche 1 bis 4, dadurch gekennzeichnet, daß mittlere Teilchengröße des Graphits in der Graphitdispersion < 10µm ist.

6. Verfahren nach einem oder mehreren der Ansprüche 1 bis 5, dadurch gekennzeichnet, daß Graphitdispersion 10 - 50 Gew.% Graphit und 5 - 35 Gew.% organisches Polymer enthält.

7. Verfahren nach einem oder mehreren der Ansprüche 1 bis 4 oder 6, dadurch gekennzeichnet, daß als organisches Polymer ein amphiphiles Copolymer verwendet wird.

8. Verfahren nach Anspruch 7, dadurch gekennzeichnet, daß als amphiphiles Copolymer ein Copolymer des Vinylacetats verwendet wird.

9. Verfahren nach einem oder mehreren der Ansprüche 1 bis 8, dadurch gekennzeichnet, daß eine wäßrige Graphitdispersion verwendet wird.

10. Verfahren nach Anspruch 9, dadurch gekennzeichnet, daß 0,5 - 3 Gew.% der wäßrigen Graphitdispersion verwendet werden.
